# EUROPÄISCHE PATENTANMELDUNG

(11) **EP 1 139 475 A2**
(43) Veröffentlichungstag der Anmeldung: **04.10.2001**
(21) Anmeldenummer: 01105526.6
(22) Anmeldetag: 06.03.2001
(51) Int. Cl.: H01M 8/06, H01M 8/04

(54) **Brennstoffzellensystem und Verfahren zum Betreiben eines Brennstoffzellensystems**

(30) Priorität: 29.03.2000 DE 10015654
(71) Anmelder: XCELLSIS GmbH, 73230 Kirchheim/Teck-Nabern (DE)
(72) Erfinder: Belschner, Werner, 73274 Notzingen (DE); Blum, Joachim, Dr., 73779 Deizisau (DE); Kaufmann, Lars, 73230 Kirchheim (DE)
(74) Vertreter: Kaufmann, Ursula Josefine, Dr.rer.nat. Dipl.-Phys.

(57) **Zusammenfassung**

Die Erfindung betrifft ein Brennstoffzellensystem mit einem Gaserzeugungssystem zur Bereitstellung von Wasserstoff aus einem kohlenstoff- und wasserstoffhaltigen Medium für eine Brennstoffzelleneinheit und ein Verfahren zum Betreiben des Brennstoffzellensystems, wobei stromauf der Brennstoffzelleneinheit Mittel zur Einstellung eines Druckes im Gaserzeugungssystem und/oder eines Massenstromes durch die Brennstoffzelleneinheit vorgesehen sind, so daß beim Übergang von einem Teillastbereich zu einem Vollastbereich der Druck zumindest kurzzeitig verringerbar ist und beim Übergang von einem Vollastbereich zu einem Teillastbereich der Druck zumindest kurzzeitig vergrößerbar ist.

## Beschreibung

Die Erfindung betrifft ein Brennstoffzellensystem und ein Verfahren zum Betreiben eines Brennstoffzellensytems gemäß dem Oberbegriff der unabhängigen Ansprüche.

In Brennstoffzellenfahrzeugen, welche mit wasserstoffhaltigen Fluiden wie etwa Methanol betrieben werden, ist unter anderem die Ansprechzeit des Gaserzeugungssystems für die Dynamik des Fahrzeugs wesentlich. Aufgrund einer geänderten Leistungsanforderung durch den Fahrer wird z.B. mehr oder weniger Wasserstoff im Gaserzeugungssystem aus Methanol erzeugt und der Brennstoffzelle zur Verfügung gestellt. Um eine ausreichende kurze Reaktionszeit des Systems zu ermöglichen, werden z.B. möglichst kompakte Reaktoren mit kurzen Gasströmungswegen in einem Gaserzeugungssystem vorgeschlagen. Ein derartiges Gaserzeugungssystem für ein Brennstoffzellenfahrzeug ist z.B. aus der DE 197 46 251 C2 bekannt.

Der Erfindung liegt die Aufgabe zugrunde, ein Brennstoffzellensystem und ein Verfahren zum Betreiben eines Brennstoffzellensystems mit einer verbesserten Dynamik anzugeben.

Diese Aufgabe wird bei einem Brennstoffzellensystem durch die Merkmale des Anspruchs 1 und bei einem Verfahren zum Betreiben eines Brennstoffzellensystems durch die Merkmale des Anspruchs 6 gelöst.

Erfindungsgemäß ist vorgesehen, in einem Gaserzeugungssystem eines Brennstoffzellensystems stromauf einer Brennstoffzelleneinheit Mittel zur Einstellung eines Druckes im Gaserzeugungssystem und/oder eines Massenstromes durch die Brennstoffzelleneinheit in Abhängigkeit von einer Last der Brennstoffzelleneinheit vorzusehen, derart daß beim Übergang von einem Teillastbereich zu einem Vollastbereich der Druck zumindest kurzzeitig verringerbar ist und beim Übergang von einem Vollastbereich zu einem Teillastbereich der Druck zumindest kurzzeitig vergrößerbar ist.

Es ist günstig, Mittel zur Druckregelung vorzusehen, um den Druck im Teillastbereich und/oder Vollastbereich einzustellen.

Besonders günstig ist es, Mittel zur Massenstromregelung vorzusehen, um einen Massen- bzw. Volumenstrom eines der Brennstoffzelleneinheit zugeführten Mediums zu regeln.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine Prinzipdarstellung eines erfindungsgemäßen Brennstoffzellensystems mit Druckregelung,
- Fig. 2: ein Vergleich des zeitlichen Verlaufs von Brennstoff-Dosierung, Solldruck und Massenstrom in einem erfindungsgemäßen Brennstoffzellensystem mit Druckregelung,
- Fig. 3: eine Prinzipdarstellung eines erfindungsgemäßen Brennstoffzellensystems mit Massenstromregelung,
- Fig. 4: ein Vergleich des zeitlichen Verlaufs von Brennstoff-Dosierung, Solldruck und Massenstrom in einem erfindungsgemäßen Brennstoffzellensystem.

Die Erfindung ist für Brennstoffzellensysteme geeignet, bei denen eine hohe Dynamik gefordert ist. Eine besonders bevorzugte Anwendung wird bei mobilen Systemen gesehen, besonders bei Fahrzeugen mit Brennstoffzellen, die mit Methanol oder einem anderen kohlen- und wasserstoffhaltigen Medium betrieben werden. Im folgenden wird der Übersichtlichkeit wegen nur Methanol als Brennstoff betrachtet.

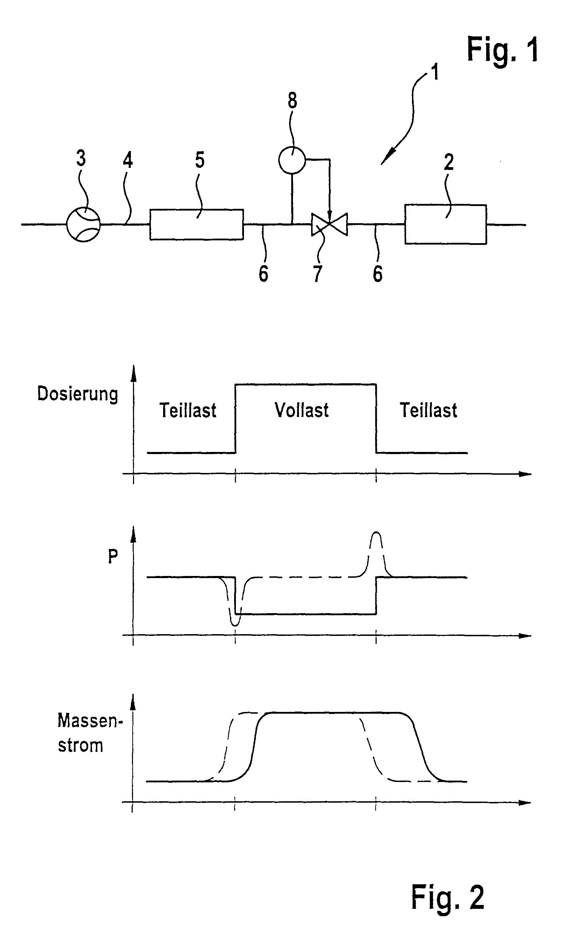

In Fig. 1 ist schematisch ein Brennstoffzellensystem 1 für ein methanolbetriebenes Brennstoffzellenfahrzeug dargestellt. Die Brennstoffzelleneinheit 2, die die Leistung zum Antreiben des Fahrzeugs zur Verfügung stellt, besteht aus einer oder mehreren miteinander entsprechend verschalteten Brennstoffzellen. Ein Brennstoff, z.B. ein kohlen- und wasserstoffhaltiges Medium wie Methanol, wird mit einer Dosiereinrichtung 3 über eine Zuleitung 4 in ein Gaserzeugungssystem 5 geführt. Dort wird durch Reformierung des Mediums Wasserstoff gewonnen, welches der Brennstoffzelleneinheit 2 als Betriebsmittel über die Leitung 6 zugeführt wird. Stromauf der Brennstoffzelleneinheit 2 ist in der Leitung 6 ein Regelventil 7 vorgesehen, welches in einer ersten bevorzugten Ausführung ein Druckregelventil ist. Ein Drucksensor 8 überwacht den Druck im Gaserzeugungssystem 5 vor der Brennstoffzelleneinheit 2 und stellt diesen nach den Lastanforderungen oder Lastbereichen ein.

In Fig. 2 ist ein Vergleich des zeitlichen Verlaufs von Methanol-Dosierung, Solldruck im Gaserzeugungssystem 5 und Massenstrom des Wasserstoffs durch die Brennstoffzelleneinheit 2 in einem erfindungsgemäßen Brennstoffzellensystem mit Druckregelung dargestellt. Aus der Dosiereinrichtung 3 wird im Teillastbereich eine entsprechend geringe Menge Methanol bereitgestellt. Bei einem Lastwechsel zu Vollast muß die Methanolmenge erhöht und bei geringerer Lastanforderung wieder abgesenkt werden (obere Kurve). Gemäß der Erfindung wird der Druck vor der Brennstoffzelleneinheit 2 durch Ansteuerung des Regelventils 7 so eingestellt, daß beim Übergang vom Teillastbereich zum Vollastbereich der Druck zumindest kurzzeitig abgesenkt wird und beim Übergang vom Vollastbereich zum Teillastbereich zumindest kurzzeitig erhöht wird.

In der mittleren Kurve ist ein bevorzugter Druckverlauf im Gaserzeugungssystem 5 mit Druckregelung dargestellt (durchgezogene Linie). Der Druck des Mediums im Gaserzeugungssystem 5 im Teillastbereich ist gegenüber dem Druck im Vollastbereich erhöht. Die gestrichelte Linie stellt als erfindungsgemäße Alternative einen Druckverlauf dar, bei dem der Druck nur im Übergangsbereich eines Lastwechsels kurzzeitig verändert wird. Nach dem Übergang von Teillast zu Vollast wird der Druck wieder erhöht, bevorzugt auf seinen Ausgangswert vor dem Lastwechsel. Alternativ wird nach dem Übergang von Vollast zu Teillast, bei dem der Druck kurzzeitig über seinen Ausgangswert erhöht wurde, der Druck wieder abgesenkt.

Durch die Druckvorgabe des Druckreglers, die zumindest mittelbar auch auf die Dosiereinrichtung 3 der Brennstoff-Dosierung für die Brennstoffzelleneinheit (2) wirkt, folgt der Massenstrom des Wasserstoffs durch die Brennstoffzelleneinheit 2 der aktuellen Lastanforderung sehr schnell. Dies ist in der unteren Kurve erkennbar. Die durchgezogene Linie entspricht dem Verlauf des Massenstroms, wenn z.B. der Druck im Gaserzeugungssystem 5 einfach konstant gehalten würde. Die gestrichelte Linie stellt den Verlauf des Massenstroms dar, wenn gemäß der Erfindung der Druck im Teillastbereich höher ist als der im Vollastbereich, bzw. bei positivem Lastwechsel zumindest kurzzeitig der Druck erhöht bzw. bei negativem Lastwechsel zumindest kurzzeitig erniedrigt wird.

Der Druck im Gaserzeugungssystem 5 dient der Druckregelung als Regelgröße. Die Dosierung des Methanols in der Dosiereinrichtung 3 wird entsprechend der Lastanforderung eingestellt. Die Dosierung bleibt im wesentlichen gleich, auch wenn der Druck mit der Last variiert oder konstant bleibt. Der Massenstrom durch die Brennstoffzelleneinheit 2 folgt der Druckvorgabe. Bei Teillast wird für eine kurze Übergangszeit mehr Wasserstoff erzeugt, als dem augenblicklichen Verbrauch der Brennstoffzelleneinheit 2 entspricht, und der Druck im Gaserzeugungssystem erhöht sich bis zu einem vorgegebenen Wert. Bei einer Lastanforderung muß nur das Druckregelventil 7 geöffnet werden, um schnell eine ausreichende Menge Wasserstoff der Brennstoffzelleneinheit 2 zuzuführen, so daß die Schnelligkeit des Druckregelventils der maßgebliche Faktor für die Dynamik des Systems darstellt. Ein Druckregelventil kann jedoch in sehr viel kürzerer Zeit reagieren als die Ansprechzeit des Gaserzeugungssystems 5, die im Bereich von Sekunden liegen kann.

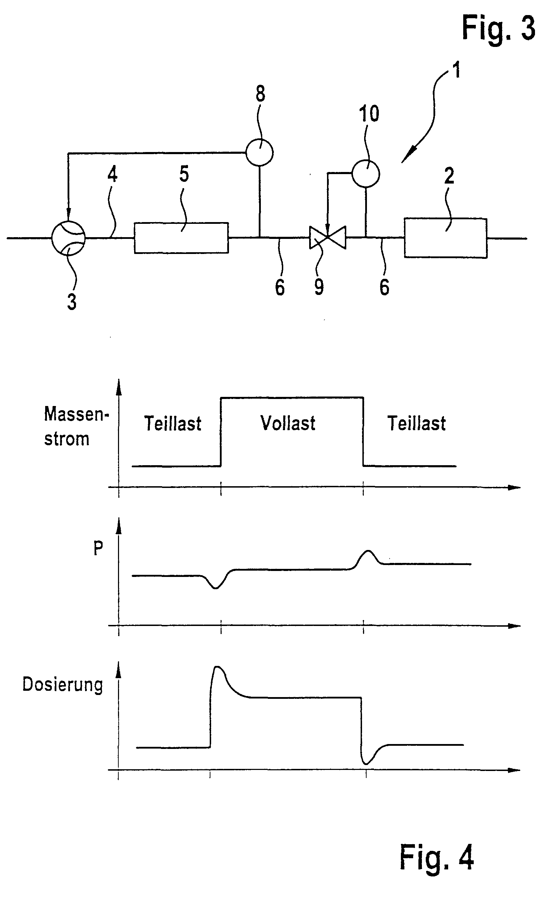

In Fig. 3 ist eine weiterer bevorzugte Ausgestaltung der Erfindung schematisch dargestellt. Gleiche Elemente wie in Fig. 1 sind mit gleichen Bezugszeichen versehen. Eine Brennstoffzelleneinheit 2 eines Brennstoffzellensystem 1, welche die Leistung zum Antreiben eines Fahrzeugs zur Verfügung stellt, besteht aus einer oder mehreren miteinander entsprechend verschalteten Brennstoffzellen. Ein kohlen- und wasserstoffhaltiges Medium wird mit einer Dosiereinrichtung 3 über eine Zuleitung 4 in ein Gaserzeugungssystem 5 geführt. Dort wird aus dem Medium Wasserstoff extrahiert, welches der Brennstoffzelleneinheit 2 als Betriebsmittel über die Leitung 6 zugeführt wird. Stromauf der Brennstoffzelleneinheit 2 ist ein Regelventil 9 vorgesehen, welches in einer bevorzugten Ausführung ein Massenstromregelventil ist, um den Wasserstoff-Massenstrom durch die Brennstoffzelleneinheit 2 einzustellen. Ein Drucksensor 8 überwacht den Druck im Gaserzeugungssystem 5 vor der Brennstoffzelleneinheit 2 und stellt die Dosierung an der Dosiereinrichtung 3 nach den Lastanforderungen oder Lastbereichen ein. Ein Massenstromsensor 10 überwacht den Wasserstoff-Massenstrom durch die Brennstoffzelle und wirkt entsprechend einer aktuellen Lastanforderung auf das Regelventil 9 ein.

In Fig. 4 ist ein Vergleich des zeitlichen Verlaufs von Methanol-Dosierung, Solldruck im Gaserzeugungssystem 5 und Massenstrom durch die Brennstoffzelleneinheit 2 in einem erfindungsgemäßen Brennstoffzellensystem 1 mit Massenstromregelung dargestellt.

Bei Teillast ist der Wasserstoff-Massenstrom durch die Brennstoffzelleneinheit 2 auf einen geringen Wert eingestellt (obere Kurve). Bei Lastwechsel, d.h. Übergang von Teillast zu Vollast, wird der Sollwert des Massenstroms entsprechend dem anstehenden elektrischen Strombedarf schnell angehoben. Bei Lastwechsel von Vollast zu Teillast wird der Massenstrom durch die Brennstoffzelleneinheit 2 wieder verringert.

Der Druck im Gaserzeugungssystem 5 folgt der vorgegebenen Änderung des Massenstroms, indem bei Übergang vom Teillastbereich zu Vollastbereich das Regelventil 9 mehr Massenstrom passieren läßt und daher der Druck kurzzeitig absinkt. Bei Übergang von Vollastbereich zu Teillastbereich steigt der Druck kurzzeitig an, da das Regelventil 9 weniger Massenstrom passieren läßt (mittlere Kurve). Der Druck steigt nach der kurzzeitigen Abnahme bzw. sinkt nach der kurzzeitigen Zunahme wieder auf einen Wert, der dem Ausgangswert des Drucks entspricht. Außerhalb der Lastwechselbereiche ist der Druck im Gaserzeugungssystem im wesentlichen konstant. Es können jedoch auch unterschiedliche Druckniveaus in verschiedenen Lastbereichen eingestellt werden.

Der Drucksensor 8 registriert den Druck bzw. die Druckänderung im Gaserzeugungssystem 5 und stellt die Dosierung des Methanols an der Dosiereinrichtung 3 entsprechend ein. Dies ist in der unteren Kurve der Fig. 4 dargestellt. Fällt bei positivem Lastwechsel der Druck kurzzeitig ab, so wird die Dosierung erhöht, wobei beim Übergang die Dosierung kurzzeitig überhöht wird. Entsprechend wird bei negativem Lastwechsel bei kurzzeitiger Druckerhöhung die Dosierung wieder verringert, wobei beim Übergang die Dosierung kurzzeitig unter den gewünschten Wert verringert wird. Die Dosierung ist die Stellgröße in dieser Regelschleife.

Bei der erfindungsgemäßen Anordnung kann auf aufwendige und schwere externe Leistungspuffer verzichtet werden. Bei Beschleunigung des Fahrzeugs steht sehr schnell ein zusätzlicher Wasserstoff-Fluß für die Brennstoffzelleneinheit 2 zur Verfügung. Bei Lastreduktion wird ein unerwünschtes "Nachlaufen" des Wasserstoffs vermieden.

## Patentansprüche

1. Brennstoffzellensystem mit einem Gaserzeugungssystem (5) zur Bereitstellung von Wasserstoff aus einem kohlenstoff- und wasserstoffhaltigen Medium für eine Brennstoffzelleneinheit (2),
**dadurch gekennzeichnet,**
**daß** stromauf der Brennstoffzelleneinheit (2) Mittel (7, 8, 9, 10) zur Einstellung eines Druckes im Gaserzeugungssystem (5) und/oder eines Massenstromes durch die Brennstoffzelleneinheit (2) in Abhängigkeit von einer Last der Brennstoffzelleneinheit (2) vorgesehen sind, derart daß beim Übergang von einem Teillastbereich zu einem Vollastbereich der Druck zumindest kurzzeitig verringerbar ist und beim Übergang von einem Vollastbereich zu einem Teillastbereich der Druck zumindest kurzzeitig vergrößerbar ist.

2. Brennstoffzellensystem nach Anspruch 1,
**dadurch gekennzeichnet,**
**daß** die Mittel (7, 8) eine Druckregelung mit einem Druckregelventil (7) stromauf der Brennstoffzelleneinheit (2) umfassen.

3. Brennstoffzellensystem nach Anspruch 1,
**dadurch gekennzeichnet,**
**daß** die Mittel (9, 10) eine Massenstromregelung mit einem Massenstromregelventil (9) stromauf der Brennstoffzelleneinheit (2) und einen Drucksensor (8) zur Beeinflussung der Brennstoff-Dosierung an einer Dosiereinrichtung (3) umfassen.

4. Verfahren zum Betreiben eines Brennstoffzellensystems (1) mit einem Gaserzeugungssystem (5) nach Anspruch 1,
**dadurch gekennzeichnet,**
**daß** beim Übergang von einem Teillastbereich zu einem Vollastbereich der Druck im Gaserzeugungssystem (5) zumindest kurzzeitig erniedrigt wird und beim Übergang von einem Vollastbereich zu einem Teillastbereich zumindest kurzzeitig erhöht wird.

5. Verfahren nach Anspruch 4,
**dadurch gekennzeichnet,**
**daß** die Brennstoff-Dosierung für die Brennstoffzelleneinheit (2) in Abhängigkeit von einer Last der Brennstoffzelleneinheit (2) verändert wird.

6. Verfahren nach Anspruch 4,
**dadurch gekennzeichnet,**
**daß** die Brennstoff-Dosierung für die Brennstoffzelleneinheit (2) im Vollastbereich höher eingestellt wird als im Teillastbereich.

7. Verfahren nach Anspruch 4,
**dadurch gekennzeichnet,**
**daß** der Druck im Gaserzeugungssystem (5) im Teillastbereich höher eingestellt wird als im Vollastbereich.

8. Verfahren nach Anspruch 4,
**dadurch gekennzeichnet,**
**daß** der Druck im Gaserzeugungssystem (5) außerhalb der Lastwechselbereiche im wesentlichen konstant gehalten wird.

9. Verfahren nach Anspruch 1,
**dadurch gekennzeichnet,**
**daß** der Druck im Gaserzeugungssystem (5) mit einer Druckregelung geregelt wird.

10. Verfahren nach Anspruch 4,
**dadurch gekennzeichnet,**
**daß** ein Massenstrom eines der Brennstoffzelleneinheit (2) zugeführten Brennstoffs geregelt wird.
